# EUROPEAN PATENT SPECIFICATION

(11) **EP 3 806 386 B1**
(45) Date of publication and mention of the grant of the patent: **13.03.2024**
(21) Application number: 19806917.1
(22) Date of filing: 08.04.2019
(51) Int. Cl.: H04L 45/28, H04L 45/16, H04L 69/22, H04L 12/46

(54) **MULTICAST FAST SWITCHING METHOD, DEVICE, APPARATUS, AND STORAGE MEDIUM**
SCHNELLES MULTICAST-UMSCHALTVERFAHREN, VORRICHTUNG, GERÄT UND SPEICHERMEDIUM
PROCÉDÉ DE COMMUTATION RAPIDE DE MULTIDIFFUSION, DISPOSITIF, APPAREIL, ET SUPPORT DE STOCKAGE

(30) Priority: 25.05.2018 CN 201810517110
(43) Date of publication of application: 14.04.2021
(73) Proprietor: ZTE Corporation, Shenzhen, Guangdong 518057 (CN)
(72) Inventor: ZHANG, Zheng, Shenzhen, Guangdong 518057 (CN); YU, Jinghai, Shenzhen, Guangdong 518057 (CN)
(74) Representative: Mozzi, Matteo
(86) International application number: PCT/CN2019/081726
(87) International publication number: WO 2019/223435

(56) References cited:
- CN-A- 1 780 253
- CN-A- 1 780 253
- CN-A- 102 611 629
- CN-A- 106 656 524
- CN-A- 107 171 977
- BRAUN WOLFGANG ET AL: "Performance comparison of resilience mechanisms for stateless multicast using BIER", 2017 IFIP/IEEE SYMPOSIUM ON INTEGRATED NETWORK AND SERVICE MANAGEMENT (IM), IFIP, 8 May 2017 (2017-05-08), pages 230-238, XP033127614, DOI: 10.23919/INM.2017.7987284 [retrieved on 2017-07-20]

## Description

### Technical Field

The present disclosure relates to the technical field of communications.

### Background

With the rapid development of Internet, multicast technologies have been used more and more widely. A Bit Indexed Explicit Replication (BIER) technology is a multicast data forwarding technology, which implements forwarding according to the shortest path to a destination node. A Bit Indexed Explicit Replication Traffic Engineering (BIER-TE) technology further transmits, on the basis of the BIER technology, traffic according to an established link until the traffic reaches the destination node.

Inevitably, link failure may occur in a network. In the event of a failure that a next hop device is inaccessible, fast switching (that is, Fast Re-Route (FRR)) is required. For the BIER forwarding, because internal protocols, such as Open Shortest Path First (OSPF), intermediate System to intermediate System (ISIS) or Border Gateway Protocol (BGP), can form a FRR forwarding table, the fast switching to the formed FRR table in the event of the failure is possible. However, for the BIER-TE forwarding, because forwarding is performed according to a pre-determined link, the only solution to the link failure is to calculate a backup path in advance. However, the process of calculating the backup forwarding path is complex and difficult, and the more reliable the scheme is, the higher the computation complexity will be. The draft-eckert-bier-te-frr draft has clearly specified several applicable scenarios and calculation methods of the BIER-TE FRR technologies, as well as their limitations and disadvantages. Up to now, there is no effective method to solve the problem of the BIER-TE FRR technologies.

Document BRAUN WOLFGANG ET AL: "Performance comparison of resilience mechanisms for stateless multicast using BIER", 2017 IFIP/IEEE SYMPOSIUM ON INTEGRATED NETWORK AND SERVICE MANAGEMENT (IM), IFIP, 8 may 2017, pages 230-238 discloses a performance comparison of resilience mechanisms for stateless multicast using BIER.

### Summary

The invention is set out in the appended set of claims.

The embodiments of the present disclosure provide a multicast fast switching method, which includes the following operations. When forwarding a multicast BIER-TE packet, a forwarding node detects whether an abnormality occurs in a forwarding link between the forwarding node and a next node. In responsive to detecting that an abnormality occurs in the forwarding link between the forwarding node and the next node, the forwarding node determines whether the multicast BIER-TE packet is configured with a multicast fast switching tag. In responsive to determining, by the forwarding node, that the multicast BIER-TE packet is configured with the multicast fast switching tag, multicast fast switching is performed according to the multicast fast switching tag.

When encapsulating the BIER-TE packet, an ingress node adds a FRR-BIER tag in a BIER-TE header of the multicast BIER-TE packet, and adds a BIER header for FRR behind the BIER-TE header.

The embodiments of the present disclosure provide a multicast fast switching device applied to a forwarding node configured to perform the method of claim 1 and an ingress node configured to perform the method of claim 8.

The present disclosure provides a computer storage medium, which stores the program for multicast fast switching. When executed by the processor, the program for multicast fast switching implements the multicast fast switching method according to any one of claims 1-7 and the method according to any one of claims 8-11.

### Brief Description of the Drawings

Fig. 1 is a schematic diagram showing normal forwarding of BIER in some cases.
Fig. 2 is a flowchart of a multicast fast switching method provided in the embodiments of the present disclosure.
Fig. 3 is a schematic diagram showing a multicast fast switching device provided in the embodiments of the present disclosure.
Fig. 4 is a schematic diagram showing link abnormality of an R1 node provided in the embodiments of the present disclosure.
Fig. 5 is a schematic diagram showing an encapsulation format of an R1 node provided in the embodiments of the present disclosure.
Fig. 6 is a schematic diagram showing link abnormality of an R3 node provided in the embodiments of the present disclosure.
Fig. 7 is a flowchart of encapsulation performed by an ingress node provided in the embodiments of the present disclosure.
Fig. 8 is a flowchart of processing performed by a forwarding node provided in the embodiments of the present disclosure.
Fig. 9 is a flowchart of another processing performed by a forwarding node provided in the embodiments of the present disclosure.
Fig. 10 is a schematic diagram showing an encapsulation format provided in the embodiments of the present disclosure.

### Detailed Description of the Embodiments

The exemplary embodiments of the present disclosure are elaborated below in combination with the accompanying drawings. It should be understood that the exemplary embodiments elaborated below are intended only to illustrate and explain the present disclosure and not to limit the present disclosure.

In the BIER technology, a specific BIER header, in which all destination nodes of multicast traffic are annotated in the form of bit string, is encapsulated in a packet. A forwarding node of an intermediate network routes the packet to ensure that the traffic can be sent to all the destination nodes. The forwarding node of the intermediate network floods and sends node information through protocols, such as an OSPF protocol, an ISIS protocol, a BGP protocol or a Babel protocol, to form a Bit Index Forwarding Table (BIFT) for guiding BIER forwarding.

In the BIER-TE technology, when the multicast traffic is encapsulated, the bit string is also encapsulated in the BIER header, but each bit in the bit string is used to identify a specific link rather than the destination node. During forwarding, the forwarding node processes the packet in a different way from the traditional BIER way. For example, firstly, a BIER-TE forwarding table to be queried is similar to a BIER forwarding table only in the form, but in fact, the BIER-TE forwarding table is a completely independent forwarding table, and each bit in the forwarding table represents a link rather than a node; secondly, during forwarding according to the forwarding table, forwarding and corresponding processing are conducted only according to the bit corresponding to the link connected with the node, so as to ensure that the packet will not loop back and can reach the destination correctly.

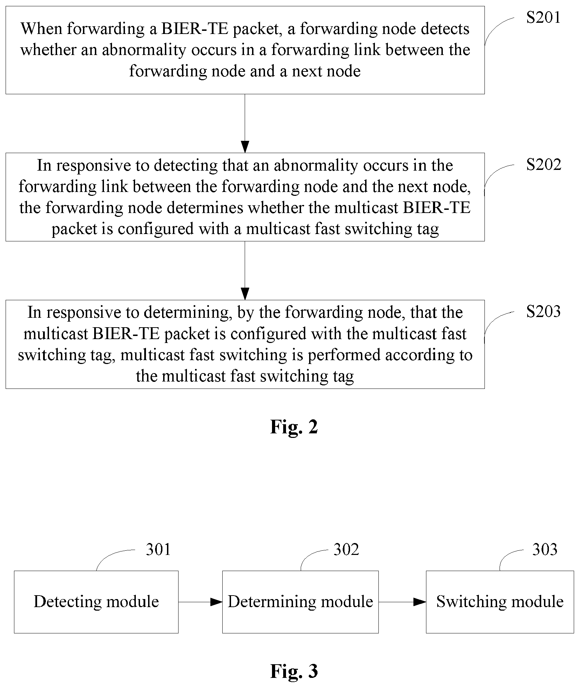

Fig. 2 is a flowchart of a multicast fast switching method provided in the embodiments of the present disclosure. As shown in Fig. 2, the method according to the invention includes operations S201 to S203.

At S201, when forwarding a BIER-TE packet, a forwarding node detects whether an abnormality occurs in a forwarding link between the forwarding node and a next node.

At S202, in responsive to detecting that an abnormality occurs in the forwarding link between the forwarding node and the next node, the forwarding node determines whether the multicast BIER-TE packet is configured with a multicast fast switching tag.

At S203, in responsive to determining, by the forwarding node, that the multicast BIER-TE packet is configured with the multicast fast switching tag, multicast fast switching is performed according to the multicast fast switching tag.

In the embodiments of the present disclosure, the method may further include the following operation: in responsive to determining, by the forwarding node, that the multicast BIER-TE packet is not configured with the multicast fast switching tag, the multicast BIER-TE packet is forwarded as a normal multicast BIER-TE packet.

In an embodiment, the operation that the forwarding node determines whether the multicast BIER-TE packet is configured with the multicast fast switching tag may include the following operations. The forwarding node determines whether there is a FRR-BIER tag in a BIER-TE header of the multicast BIER-TE packet according to the multicast BIER-TE packet. In responsive to determining that there is the FRR-BIER tag in the BIER-TE header of the multicast BIER-TE packet, the forwarding node determines that the multicast BIER-TE packet is configured with the multicast fast switching tag; and in responsive to determining that there is no FRR-BIER tag in the BIER-TE header of the multicast BIER-TE packet, the forwarding node determines that the multicast BIER-TE packet is not configured with the multicast fast switching tag. In the embodiments, the FRR-BIER tag is used for indicating that there is a BIER header for FRR in the multicast BIER-TE packet.

According to the invention, the operation that in responsive to determining, by the forwarding node, that the multicast BIER-TE packet is configured with the multicast fast switching tag, the multicast fast switching is performed according to the multicast fast switching tag includes the following operation. In responsive to determining that the multicast BIER-TE packet is configured with the multicast fast switching tag, the forwarding node deletes the BIER-TE header in the multicast BIER-TE packet, and performs the multicast fast switching according to the BIER header in the multicast BIER-TE packet.

In an embodiment, the method may further include the following operations. The forwarding node determines whether the forwarding node is a transport node according to the BIER-TE header. In responsive to determining that the forwarding node is the transport node, and determining that there is the FRR-BIER tag in the BIER-TE header, the forwarding node deletes a bit, which represents the forwarding node, in the BIER header.

A multicast fast switching method provided by the invention includes the following operation. When encapsulating a BIER-TE packet, an ingress node adds a FRR-BIER tag in a BIER-TE header of the multicast BIER-TE packet, and adds a BIER header for FRR behind the BIER-TE header. Thus, the forwarding node may perform the multicast fast switching according to the BIER header when an abnormality occurs in the forwarding link.

In an embodiment, the ingress node performs, according to a user configuration or a FRR-BIER protection instruction issued by a remote controller, the operations of adding the FRR-BIER tag in the BIER-TE header of the multicast BIER-TE packet and adding the BIER header for FRR behind the BIER-TE header.

Fig. 3 is a schematic diagram showing a multicast fast switching device accoring to the invention.

The device is applied to a forwarding node. As shown in Fig. 3, the device includes: a detecting module 301, a determining module 302 and a switching module 303. The detecting module 301 is configured to detect, when forwarding a multicast BIER-TE packet, whether an abnormality occurs in a forwarding link between the forwarding node and a next node. The determining module 302 is configured to determine, when the detecting module 301 detects that an abnormality occurs in the forwarding link between the forwarding node and the next node, whether the multicast BIER-TE packet is configured with a multicast fast switching tag. The switching module 303 is configured to perform, when the determining module 302 determines that the multicast BIER-TE packet is configured with the multicast fast switching tag, multicast fast switching according to the multicast fast switching tag.

In an embodiment, the switching module 303 is further configured to forward the multicast fast switching as a normal multicast BIER-TE packet when the determining module 302 determines that the multicast BIER-TE packet is not configured with the multicast fast switching tag. In accordance with the invention, the device is configured to delete the BIER-TE header in the multicast BIER-TE packet and perform the multicast fast switching according to the BIER header in the multicast BIER-TE packet when the determining module 302 determines the multicast BIER-TE packet is configured with the multicast fast switching tag.

The invention also provides a multicast fast switching device, which is applied to an ingress node and includes an adding module. The adding module is configured to, when encapsulating a multicast BIER-TE packet, add a FRR-BIER tag in a BIER-TE header of the multicast BIER-TE packet, and add a BIER header for FRR behind the BIER-TE header. Thus, the forwarding node can perform the multicast fast switching according to the BIER header when an abnormality occurs in the forwarding link.

The embodiments of the present disclosure also provide a multicast fast switching device, which includes: a processor and a memory coupled with the processor. The memory stores a program for multicast fast switching that is able to run on the processor. When executed by the processor, the program for multicast fast switching implements the multicast fast switching method provided by the embodiments.

The embodiments of the present disclosure also provide a computer storage medium, which stores the program for multicast fast switching. When executed by the processor, the program for multicast fast switching implements the multicast fast switching method provided by the embodiments.

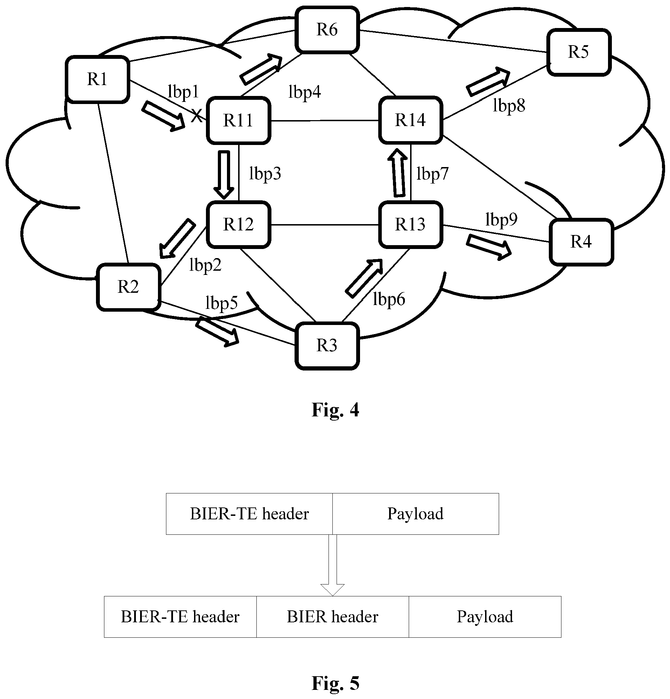

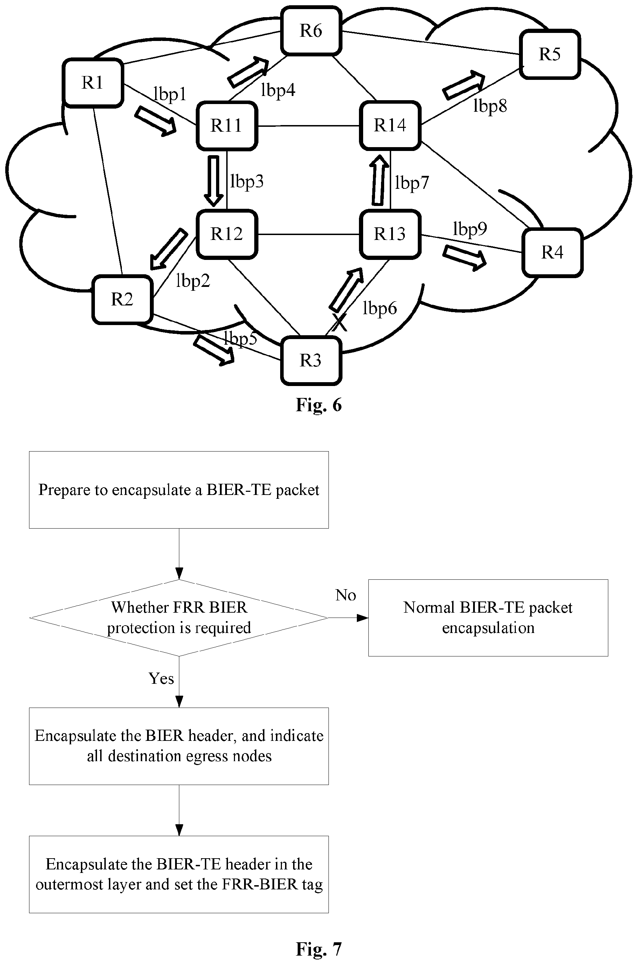

As shown in Fig. 4 and Fig. 7, in a network that supports the BIER-TE technology and the BIER forwarding technology, a process of encapsulation performed by an ingress node is shown in Fig. 7.

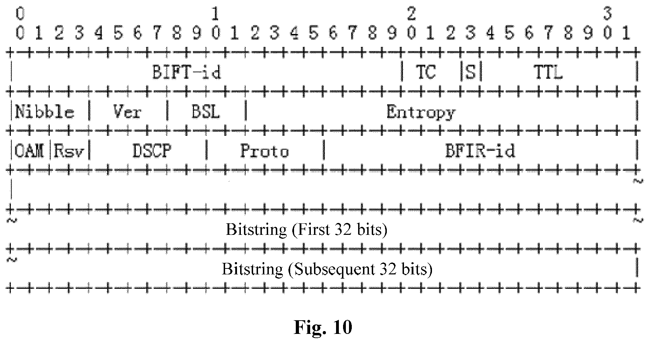

Specifically, when the ingress node encapsulates a BIER-TE packet, in addition to a normal encapsulation link Bit Position (BP) and other information, a FRR-BIER tag is also added in the BIER-TE header to indicate that there is a BIER header, which can be used for fast switching, encapsulated after the BIER-TE header. The FRR-BIER tag may be implemented in such a way that one or more bits in a reserved field in the BIER-TE header are set to a specific value. The encapsulation of other fields in the BIER-TE header may refer to a normal BIER-TE encapsulation format. The BIER header for FRR is encapsulated behind the BIER-TE header and in front of the specific traffic data (payload). The bit string of the BIER header represents BFR-id of all egress nodes. The Proto field in the BIER header should also include the payload field in the BIER-TE header. Other fields may refer to the normal BIER encapsulation format. The encapsulation format may refer to Fig. 10.

In an embodiment, the ingress node selects whether to perform FRR BIER protection. The selection may be performed based on configuration. For example, all or part of the traffic may be configured to require the protection. Or, a FRR BIER protection instruction may be issued by a controller through NETCONF, RESTCONF, BGP-Link State (LS) extension and other forms to make the ingress node enable the protection function.

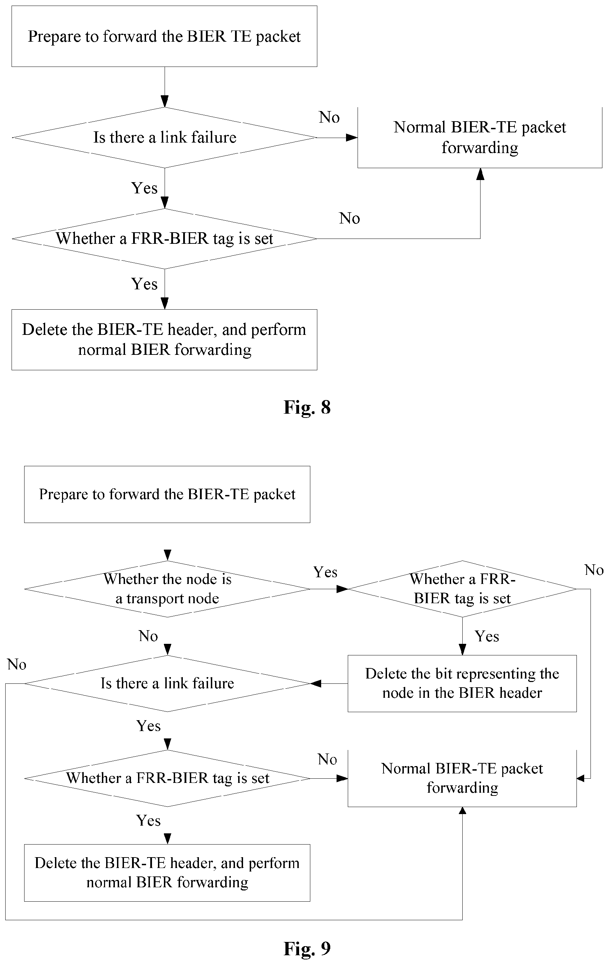

A processing flow of the forwarding node is shown in Fig. 8. Specifically, for the forwarding node, when any forwarding node is ready to forward the BIER-TE packet, if there is no failure (abnormality) in the link (between the forwarding node and the next node), the forwarding is performed according to the normal BIER-TE forwarding procedure. When there is an abnormality in the link (between the forwarding node and the next node), if there is the FRR-BIER tag in the BIER-TE header, the BIER header for FRR behind the BIER-TE header is directly obtained and used to perform the normal BIER forwarding, and all subsequent nodes will forward the packet to the egress node in accordance with the normal BIER forwarding process.

It is to be noted that if the forwarding node does not support a FRR BIER protection function, then the indication field (i.e., FRR-BIER tag) in the BIER-TE header is ignored and the forwarding follows a normal BIER-TE process.

Another processing flow of the forwarding node is shown in Fig. 9.

In the network, a transport node refers to a node which needs to de-encapsulate the packet to forward the packet out of a BIER-TE domain (that is, the node is an egress node) and also forward the packet to the next node in the domain. In the case that a certain forwarding node is a BIER-TE transport node, when there is no failure in the link required for BIER-TE forwarding, but the BIER header for FRR is included in the packet, the bit representing the node in the BIER header is deleted before forwarding, so as to reduce the possible subsequent repeated packets.

In an embodiment, if a node in the network can process the BIER header for future FRR in a preset manner or a manner of inheriting a BIER-TE format, the length of the BIER header for FRR may be further reduced, for example, the field with the same meaning as the BIER-TE header may be omitted in the BIER header to achieve the effect of reducing the overhead of the length of the header.

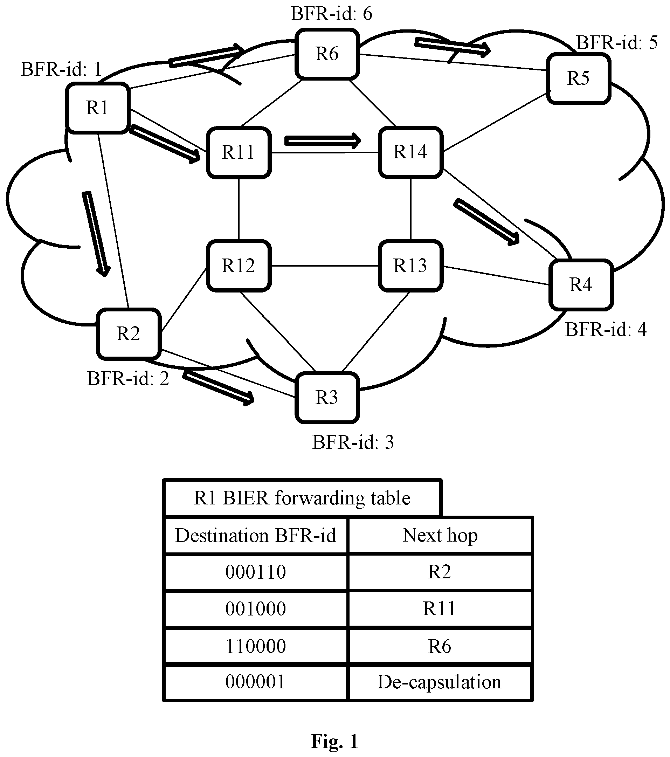

Fig. 1 shows a normal network in some cases. The network topology is not limited, and the connection between devices is as shown in the full line in Fig. 1. In the network, the BIER technology is supported. Assuming that the OSPF protocol has been enabled to transmit BIER node information, each node generates the corresponding BIER forwarding table, and the traffic will be forwarded in accordance with the BIER forwarding table same as the shortest path. It is assumed that the BFR-id of each device is a number suffix of the device name. Assuming that R1 serves as an ingress node of the BIER domain, forwarding paths to all the egress nodes R2 to R6 are as shown in the solid arrows in Fig. 1. The BIER forwarding table generated by the node R1 is shown in the R1 BIER forwarding table in Fig. 1. When the node R1 encapsulates the BIER header for the traffic, the node R1 encapsulates all the BFR-id of the egress nodes R2 to R6 in the corresponding positions of the BIER header. The packet is forwarded in accordance with the BIER forwarding table to each egress node. After each of the egress nodes R2 to R6 receives the packet, if the node finds itself to be the egress node, then the node de-encapsulates the packet and forwards the packet out of the BIER domain; if the node finds itself to be the transport node, because the packet needs to be forwarded to a next hop device, the node continues to forward the packet after modifying the BIER header according to a BIER forwarding rule.

The BIER domain also supports the BIER-TE forwarding. Assuming that for certain specific traffic, the ingress node is R1 and the egress nodes are R2 to R6, the calculated BIER-TE forwarding paths are as shown in the hollow arrow in Fig. 4. Each egress node needs to de-encapsulate and then forward the packet. Here, for simplicity, the highest bit taking a value of 1 is uniformly assigned to indicate that the packet needs to be de-encapsulated for forwarding. For each link, it is assumed that the allocated link BP is shown in Fig. 4, which is represented by lbp plus a number suffix. When the node R1 encapsulates the BIER-TE header for certain traffic, the node R1 encapsulates the value of each lbp that the traffic needs to pass in the BIER-TE header. The encapsulation manner follows the existing BIER-TE header encapsulation format.

When the BIER-TE header is encapsulated, if the packet requires FRR BIER protection, a FRR-BIER bit is set, and a BIER header for FRR is added behind the BIER-TE header and in front of the payload, as shown in Fig. 5.

Processing for several link abnormalities is described below.

As shown in Fig. 4, when a forwarding module of the node R1 performs BIER-TE forwarding, if the link is normal, the node R1 forwards the packet in accordance with the normal BIER-TE process. The used BIER-TE forwarding table, for example, is shown in Table 1.

**Table 1 The BIER-TE forwarding table of the node R1**

| R1 BIER-TE forwarding table | |
|---|---|
| TE bit string | Fwd-connected |
| 0000000001 | R11 |

When the forwarding module of the node R1 performs BIER-TE forwarding, if a failure (abnormality) is found in a link lbp1, the node R1 deletes the BIER-TE header of the packet, and directly uses the BIER header for forwarding. In this case, the BIER forwarding table has been modified due to the impact of link convergence, the actually used BIER forwarding table, for example, is shown in Table 2, and the packet flow follows the path in Fig. 1.

**Table 2 The BIER forwarding table of the node R1**

| R1 BIER forwarding table | |
|---|---|
| Destination BFR-id | Next hop |
| 000110 | R2 |
| 001000 | R11->R6 |
| 110000 | R6 |
| 000001 | De-encapsulation |

The other processing performed by the forwarding node provided in the embodiments of the present disclosure is elaborated below in combination with Fig. 6 and Fig. 9.

R3 is a forwarding node in the network. When the node R3 receives a BIER-TE packet forwarded from the upstream node R12 and prepares to perform BIER-TE forwarding, if the link is found to be normal, the node R3 forwards the packet in accordance with the normal BIER-TE process, and the used BIER-TE forwarding table, for example, is shown in Table 3.

**Table 3 The BIER-TE forwarding table of the node R3**

| R3 BIER-TE forwarding table | |
|---|---|
| TE bit string | Fwd-connected |
| 0000010000 | R2 |
| 0000100000 | R13 |
| 1000000000 | De-encapsulation |

When performing BIER-TE forwarding, the forwarding module of the node R3 first finds that the node R3 is the egress node. After the node R3 de-encapsulates and forwards the packet, if the link lbp6 involved in forwarding is found to have a failure (abnormality), the node R3 deletes the BIER-TE header of the packet, and directly uses the BIER header for forwarding. In this case, the BIER forwarding table has been modified due to the impact of link convergence, and the actually used BIER forwarding table, for example, is shown in Table 4. The packet flow also follows the normal BIER shortest path, which will not be repeated here.

**Table 4 The BIER forwarding table of the node R3**

| R3 BIER forwarding table | |
|---|---|
| Destination BFR-id | Next hop |
| 000011 | R2 |
| 011000 | R13->R12 |
| 100000 | R12 |
| 000100 | De-encapsulation |

As shown in Fig. 6, the node R3 is a transport node, that is, in addition to de-encapsulating the packet and forwarding the packet out of the BIER-TE domain, the node R3 also needs to forward the packet to R13. When performing BIER-TE forwarding, the node R3 may first find itself to be the transport node according to the BIER-TE header. After de-encapsulating and forwarding the packet, the node R3 detects whether the BIER-TE header is configured with an FRR-BIER tag. If the BIER-TE header is configured with the FRR-BIER tag, the node R3 deletes the bit representing itself from the BIER header, and then performs forwarding according to the BIER-TE table.

Similarly, the node R2 in the network is also a transport node, and the processing flow for the node R2 is similar to the processing flow for the node R3. Because the node R2 has deleted the bit for representing itself from the BIER header for FRR when performing BIER-TE forwarding, when the node R3 deletes the BIER-TE header and forwards according to the BIER header in the case of a failure in the link lbp6, the node R3 will not transmit the packet to the node R2 repeatedly since the bit representing the node R2 in the BIER header has been deleted, thereby avoiding repeated packets.

For the encapsulation format, as shown in Fig. 10, the fields (such as OAM field and Entropy field) that are exactly the same in the BIER header for FRR and the BIER-TE header may be omitted. Assuming that the ingress node R1 encapsulates the BIER header for FRR in a manner of saving the length of field, the BIER header only includes the bit string representing each egress node. At the intermediate node like the node R3, when BIER switching is performed due to a link failure, the BIER header needs to be restored, that is, filling is performed correctly to restore the normal BIER header, so as to ensure that the subsequent nodes can process forwarding normally.

Through the above description, those skilled in the art may clearly know that the method in the embodiments may be implemented by means of software plus a necessary common hardware platform, or certainly by means of hardware. Based on this understanding, the essence of the technical solution of the embodiments of the present disclosure or the part of the technical solution making a contribution to the related art can be embodied in the form of software product. The computer software product may be stored in a storage medium (for example, a Read-Only Memory (ROM)/Random Access Memory (RAM), a magnetic disk, and a compact disc) and includes a number of instructions to make a computer device (which can be a personal computer, a server or a network device, etc.) perform all or part of the method in each embodiment of the present disclosure.

Those skilled in the art should appreciate that the above modules and operations of the present disclosure may be implemented by general-purpose computing devices, and the computing devices may be centralized in a single computing device or distributed on a network composed of multiple computing devices. Optionally, the computing devices may be implemented by a program code which is capable of being executed by the computing device, so that the program code may be stored in a storage device and executed by the computing device. In some situations, the presented or described operations may be executed in an order different from that described here. The modules or the operations may be made into integrated circuit modules, respectively; or multiple modules and operations may be made into a single integrated circuit module. Therefore, the present disclosure is not limited to any particular combination of hardware and software.

According to the solutions provided by the embodiments of the present disclosure, in the network supporting both the BIER forwarding and the BIER-TE forwarding, when there is a failure in the BIER-TE forwarding link, fast switching can be performed so that the packet can successfully reach the egress node. The method provided by the embodiments of the present disclosure can be implemented simply, greatly improves the reliability of multicast service deployment, and plays a very important role in promoting the development of multicast technology.

## Claims

1. A multicast fast re-route switching method, comprising:
receiving a Bit Indexed Explicit Replication Traffic Engineering, BIER-TE packet; when forwarding the multicast Bit Indexed Explicit Replication Traffic Engineering, BIER-TE, packet, detecting (S201), by a forwarding node, whether an abnormality occurs in a forwarding link between the forwarding node and a next node; wherein the BIER-TE packet comprises a BIER-TE header and a BIER header;
in response to detecting that an abnormality occurs in the forwarding link between the forwarding node and the next node, determining (S202), by the forwarding node, whether the multicast BIER-TE packet is configured with a multicast fast re-route switching tag; and
in response to determining that the multicast BIER-TE packet is configured with the multicast fast re-route switching tag, performing (S203), by the forwarding node, multicast fast re-route switching according to the multicast fast re-route switching tag, the method being **characterised by** comprising the step of:
in response to determining that the multicast BIER-TE packet is configured with the multicast fast re-route switching tag, deleting, by the forwarding node, the BIER-TE header in the multicast BIER-TE packet, and performing, by the forwarding node, the multicast fast re-route switching according to the BIER header of the multicast BIER-TE packet.

2. The method as claimed in claim 1, further comprising:
in response to determining that the multicast BIER-TE packet is not configured with the multicast fast re-route switching tag, forwarding, by the forwarding node, the multicast BIER-TE packet as a normal multicast BIER-TE packet.

3. The method as claimed in claim 1, wherein determining (S202) whether the multicast BIER-TE packet is configured with the multicast fast re-route switching tag comprises:
determining, by the forwarding node, whether there is a Fast Re-Route BIER, FRR-BIER, tag in a BIER-TE header of the multicast BIER-TE packet according to the multicast BIER-TE packet;
in response to determining that there is the FRR-BIER tag in the BIER-TE header of the multicast BIER-TE packet, determining, by the forwarding node, that the multicast BIER-TE packet is configured with the multicast fast re-route switching tag; and
in response to determining that there is no FRR-BIER tag in the BIER-TE header of the multicast BIER-TE packet, determining, by the forwarding node, that the multicast BIER-TE packet is not configured with the multicast fast switching tag,
wherein the FRR-BIER tag is used for indicating that there is a BIER header for FRR in the multicast BIER-TE packet.

4. The method as claimed in claim 3, further comprising:
determining whether the forwarding node is a transport node according to the BIER-TE header;
in response to determining that the forwarding node is the transport node, and determining that there is the FRR-BIER tag in the BIER-TE header, deleting a bit, which represents the forwarding node, in the BIER header.

5. The method as claimed in any one of claims 3 to 4, wherein the BIER header is positioned behind the BIER-TE header.

6. The method as claimed in claim 5, wherein the BIER header is positioned behind the BIER-TE header and in front of a payload of the multicast BIER-TE packet.

7. The method as claimed in any one of claims 3 to 4, wherein the FRR-BIER tag is implemented in a manner that one or more bits in a reserved field in the BIER-TE header are set to a specific value.

8. A multicast fast re-route switching method, comprising:
when encapsulating a multicast Bit Indexed Explicit Replication Traffic Engineering, BIER-TE, packet, adding, by an ingress node, a Fast Re-Route BIER, FRR-BIER, tag in a BIER-TE header of the multicast BIER-TE packet, and adding, by the ingress node, a BIER header for FRR behind the BIER-TE header and forwards the BIER-TE packet.

9. The method as claimed in claim 8, wherein the ingress node performs, according to a user configuration or a FRR-BIER protection instruction issued by a remote controller, operations of adding the FRR-BIER tag in the BIER-TE header of the multicast BIER-TE packet and adding the BIER header for FRR behind the BIER-TE header.

10. The method as claimed in claim 8 or 9, wherein the BIER header is positioned behind the BIER-TE header and in front of a payload of the multicast BIER-TE packet.

11. The method as claimed in claim 8 or 9, wherein the FRR-BIER tag is implemented in a manner that one or more bits in a reserved field in the BIER-TE header are set to a specific value.

12. A multicast fast re-route switching device, applied to a forwarding node, comprising:
a detecting module (301), configured to detect, when forwarding a multicast Bit Indexed Explicit Replication Traffic Engineering, BIER-TE, packet that was received, whether an abnormality occurs in a forwarding link between the forwarding node and a next node; wherein the BIER-TE packet comprises a BIER-TE header and a BIER header;
a determining module (302), configured to determine, when the detecting module (301) detects that an abnormality occurs in the forwarding link between the forwarding node and the next node, whether the multicast BIER-TE packet is configured with a multicast fast re-route switching tag; and
a switching module (303), configured to perform, when the determining module (302) determines that the multicast BIER-TE packet is configured with the multicast fast re-route switching tag, multicast fast re-route switching according to the multicast fast re-route switching tag, the switching module being **characterised by**, in response to determining that the multicast BIER-TE packet is configured with the multicast fast re-route switching tag, the switching module is configured to delete the BIER-TE header in the multicast BIER-TE packet and to perform the multicast fast re-route switching according to the BIER header of the multicast BIER-TE packet.

13. A multicast fast re-route switching device, applied to an ingress node, the multicast fast re-route device being **characterised by** comprising:
an adding module, configured to, when encapsulating a multicast Bit Indexed Explicit Replication Traffic Engineering, BIER-TE, packet to be forwarded, add a Fast Re-Route BIER, FRR-BIER, tag in a BIER-TE header of the multicast BIER-TE packet, and add a BIER header for FRR behind the BIER-TE header and
a forwarding module, configured to forward the encapsulated BIER-TE packet.

14. A computer storage medium, storing a program for multicast fast re-route switching; when executed by the processor, the program for multicast fast re-route switching implements the multicast fast re-route switching method as claimed in any one of claims 1 to 7 and the method as claimed in any one of claims 8 to 11.

## Patentansprüche

1. Schnelles Re-Route-Multicast-Umschaltverfahren, umfassend:
Empfangen eines Bit Indexed Explicit Replication Traffic Engineering, BIER-TE-Pakets; beim Weiterleiten des Multicast Bit Indexed Explicit Replication Traffic Engineering, BIER-TE-Pakets, Erkennen (S201) durch einen Weiterleitungsknoten, ob eine Anomalie in einer Weiterleitungsverbindung zwischen dem Weiterleitungsknoten und einem nächsten Knoten auftritt; wobei das BIER-TE-Paket einen BIER-TE-Header und einen BIER-Header umfasst;
als Reaktion auf das Erkennen, dass eine Anomalie in der Weiterleitungsverbindung zwischen dem Weiterleitungsknoten und dem nächsten Knoten auftritt, Bestimmen (S202) durch den Weiterleitungsknoten, ob das Multicast-BIER-TE-Paket mit einem schnellen Re-Route-Multicast-Umschalttag konfiguriert ist; und
als Reaktion auf das Bestimmen, dass das Multicast-BIER-TE-Paket mit dem schnellen Re-Route-Multicast-Umschalttag konfiguriert ist, Ausführen (S203) der schnellen Re-Route-Multicast-Umschaltung gemäß dem schnellen Re-Route-Multicast-Umschalttag durch den Weiterleitungsknoten, wobei das Verfahren **dadurch gekennzeichnet ist, dass** es den folgenden Schritt umfasst:
als Reaktion auf das Bestimmen, dass das Multicast-BIER-TE-Paket mit dem schnellen Re-Route-Multicast-Umschalttag konfiguriert ist, Entfernen des BIER-TE-Headers in dem Multicast-BIER-TE-Paket durch den Weiterleitungsknoten, und Ausführen der schnellen Re-Route-Multicast-Umschaltung gemäß dem BIER-Header des Multicast-BIER-TE-Pakets durch den Weiterleitungsknoten.

2. Verfahren nach Anspruch 1, ferner umfassend:
als Reaktion auf das Bestimmen, dass das Multicast-BIER-TE-Paket nicht mit dem schnellen Re-Route-Multicast-Umschalttag konfiguriert ist, Weiterleiten des Multicast-BIER-TE-Pakets als normales Multicast-BIER-TE-Paket durch den Weiterleitungsknoten.

3. Verfahren nach Anspruch 1, wobei das Bestimmen (S202), ob das Multicast-BIER-TE-Paket mit dem schnellen Re-Route-Multicast-Umschalttag konfiguriert ist, Folgendes umfasst:
Bestimmen, durch den Weiterleitungsknoten, ob ein schnelles Re-Route BIER, FRR-BIER,-Tag in einem BIER-TE-Header des Multicast-BIER-TE-Pakets gemäß dem Multicast-BIER-TE-Paket vorhanden ist;
als Reaktion auf das Bestimmen, dass das FRR-BIER-Tag in dem BIER-TE-Header des Multicast-BIER-TE-Pakets vorhanden ist, Bestimmen, durch den Weiterleitungsknoten, dass das Multicast-BIER-TE-Paket mit dem schnellen Re-Route-Multicast-Umschalttag konfiguriert ist; und
als Reaktion auf das Bestimmen, dass kein FRR-BIER-Tag in dem BIER-TE Header des Multicast-BIER-TE-Pakets vorhanden ist, Bestimmen, durch den Weiterleitungsknoten, dass das Multicast-BIER-TE-Paket nicht mit dem schnellen Multicast-Umschalttag konfiguriert ist,
wobei das FRR-BIER-Tag verwendet wird, um anzuzeigen, dass ein BIER-Header für FRR in dem Multicast-BIER-TE-Paket vorhanden ist.

4. Verfahren nach Anspruch 3, ferner umfassend:
Bestimmen, ob der Weiterleitungsknoten ein Transportknoten gemäß dem BIER-TE-Header ist;
als Reaktion auf das Bestimmen, dass der Weiterleitungsknoten der Transportknoten ist, und auf das Bestimmen, dass das FRR-BIER-Tag in dem BIER-TE-Header vorhanden ist, Entfernen eines Bits, das den Weiterleitungsknoten repräsentiert, in dem BIER-Header.

5. Verfahren nach einem der Ansprüche 3 bis 4, wobei der BIER-Header hinter dem BIER-TE-Header positioniert ist.

6. Verfahren nach Anspruch 5, wobei der BIER-Header hinter dem BIER-TE-Header und vor einer Nutzlast des Multicast-BIER-TE-Pakets positioniert ist.

7. Verfahren nach einem der Ansprüche 3 bis 4, wobei das FRR-BIER-Tag so implementiert ist, dass ein oder mehrere Bits in einem reservierten Feld im BIER-TE-Header auf einen bestimmten Wert gesetzt werden.

8. Schnelles Re-Route-Multicast-Umschaltverfahren, umfassend:
beim Einkapseln eines Multicast Bit Indexed Explicit Replication Traffic Engineering, BIER-TE, -Pakets, Hinzufügen eines schnellen Re-Route BIER, FRR-BIER, -Tags in einem BIER-TE-Header des Multicast BIER-TE-Pakets durch einen Eingangsknoten, und Hinzufügen eines BIER-Headers für FRR hinter dem BIER-TE-Header durch den Eingangsknoten und Weiterleiten des BIER-TE-Pakets.

9. Verfahren nach Anspruch 8, wobei der Eingangsknoten gemäß einer Benutzerkonfiguration oder einer von einer entfernten Steuereinheit ausgegebenen FRR-BIER-Schutzanweisung die Operationen des Hinzufügens des FRR-BIER-Tags in den BIER-TE-Header des Multicast-BIER-TE-Pakets und des Hinzufügens des BIER-Headers für FRR hinter dem BIER-TE-Header durchführt.

10. Verfahren nach Anspruch 8 oder 9, wobei der BIER-Header hinter dem BIER-TE-Header und vor einer Nutzlast des Multicast-BIER-TE-Pakets positioniert ist.

11. Verfahren nach Anspruch 8 oder 9, wobei das FRR-BIER-Tag so implementiert ist, dass ein oder mehrere Bits in einem reservierten Feld im BIER-TE-Header auf einen bestimmten Wert gesetzt werden.

12. Schnelle Re-Route-Multicast-Umschaltvorrichtung, die auf einen Weiterleitungsknoten angewendet wird, umfassend:
ein Erfassungsmodul (301), das so konfiguriert ist, dass es beim Weiterleiten eines empfangenen Multicast Bit Indexed Explicit Replication Traffic Engineering, BIER-TE,-Pakets erkennt, ob eine Anomalie in einer Weiterleitungsverbindung zwischen dem Weiterleitungsknoten und einem nächsten Knoten auftritt; wobei das BIER-TE Paket einen BIER-TE Header und einen BIER Header umfasst;
ein Bestimmungsmodul (302), das so konfiguriert ist, dass es bestimmt, wenn das Erfassungsmodul (301) erkennt, dass eine Anomalie in der Weiterleitungsverbindung zwischen dem Weiterleitungsknoten und dem nächsten Knoten auftritt, ob das Multicast-BIER-TE-Paket mit einem schnellen Re-Route-Multicast-Umschalttag konfiguriert ist; und
ein Umschaltmodul (303), das so konfiguriert ist, dass es, wenn das Bestimmungsmodul (302) bestimmt, dass das Multicast-BIER-TE-Paket mit dem schnellen Re-Route-Multicast-Umschalttag konfiguriert ist, eine schnelle Re-Route-Multicast-Umschaltung gemäß dem schnellen Re-Route-Multicast-Umschalttag durchführt, wobei das Umschaltmodul **dadurch gekennzeichnet ist, dass** als Reaktion auf das Bestimmen, dass das Multicast-BIER-TE-Paket mit dem schnellen Re-Route-Multicast-Umschalttag konfiguriert ist, das Umschaltmodul so konfiguriert ist, dass es den BIER-TE-Header in dem Multicast-BIER-TE-Paket entfernt und die schnelle Re-Route-Multicast-Umschaltung gemäß dem BIER-Header des Multicast-BIER-TE-Pakets durchführt.

13. Schnelle Re-Route-Multicast-Umschaltvorrichtung, die an einem Eingangsknoten angewendet wird, wobei die Schnelle Re-Route-Multicast-Umschaltvorrichtung **dadurch gekennzeichnet ist, dass** sie umfasst:
ein Hinzufügungsmodul, das so konfiguriert ist, dass es beim Einkapseln eines Multicast Bit Indexed Explicit Replication Traffic Engineering, BIER-TE, -Pakets, das weitergeleitet werden soll, ein schnelles Re-Route-BIER, FRR-BIER, -Tag in einem BIER-TE-Header des Multicast-BIER-TE-Pakets hinzufügt und einen BIER-Header für FRR hinter dem BIER-TE-Header hinzufügt und
ein Weiterleitungsmodul, das so konfiguriert ist, dass es das eingekapselte BIER-TE-Paket weiterleitet.

14. Computerspeichermedium, das ein Programm zur schnellen Re-Route-Multicast-Umschaltung speichert; wenn es von dem Prozessor ausgeführt wird, implementiert das Programm zur schnellen Re-Route-Multicast-Umschaltung das schnelle Re-Route-Multicast-Umschaltverfahren nach einem der Ansprüche 1 bis 7 und das Verfahren nach einem der Ansprüche 8 bis 11.

## Revendications

1. Procédé de commutation de réacheminement rapide de multidiffusion, comprenant :
la réception d'un paquet d'ingénierie de trafic de réplication explicite d'index binaire, BIER-TE ; lors du transfert du paquet d'ingénierie de trafic de réplication explicite d'index binaire de multidiffusion, BIER-TE, la détection (S201), par un noeud de transfert, d'une occurrence d'anomalie dans une liaison de transfert entre le noeud de transfert et un noeud suivant ; le paquet de BIER-TE comprenant un en-tête de BIER-TE et un en-tête de BIER ;
en réponse à la détection de l'occurrence d'une anomalie dans la liaison de transfert entre le noeud de transfert et le noeud suivant, la détermination (S202), par le noeud de transfert, de l'éventuelle configuration du paquet de BIER-TE de multidiffusion avec une balise de commutation de réacheminement rapide de multidiffusion ; et
en réponse à la détermination de la configuration du paquet de BIER-TE de multidiffusion avec la balise de commutation de réacheminement rapide de multidiffusion, la réalisation (S203), par le noeud de transfert, d'une commutation de réacheminement rapide de multidiffusion selon la balise de commutation de réacheminement rapide de multidiffusion, le procédé étant **caractérisé en ce qu'**il comprend l'étape suivante :
en réponse à la détermination de la configuration du paquet de BIER-TE de multidiffusion avec la balise de commutation de réacheminement rapide de multidiffusion, la suppression, par le noeud de transfert, de l'en-tête de BIER-TE dans le paquet de BIER-TE de multidiffusion, et la réalisation, par le noeud de transfert, de la commutation de réacheminement rapide de multidiffusion selon l'en-tête de BIER du paquet de BIER-TE de multidiffusion.

2. Procédé selon la revendication 1, comprenant en outre :
en réponse à la détermination de la non-configuration du paquet de BIER-TE de multidiffusion avec la balise de commutation de réacheminement rapide de multidiffusion, la transmission, par le noeud de transfert, du paquet de BIER-TE de multidiffusion sous forme de paquet normal de BIER-TE de multidiffusion.

3. Procédé selon la revendication 1, dans lequel la détermination (S202) de l'éventuelle configuration du paquet de BIER-TE de multidiffusion avec la balise de commutation de réacheminement rapide de multidiffusion comprend :
la détermination, par le noeud de transfert, de l'éventuelle présence d'une balise de BIER de réacheminement rapide, FRR-BIER, dans un en-tête de BIER-TE du paquet de BIER-TE de multidiffusion selon le paquet de BIER-TE de multidiffusion ;
en réponse à la détermination de la présence de la balise de FRR-BIER dans l'en-tête de BIER-TE du paquet de BIER-TE de multidiffusion, la détermination, par le noeud de transfert, de la configuration du paquet de BIER-TE de multidiffusion avec la balise de commutation de réacheminement rapide de multidiffusion ; et
en réponse à la détermination de l'absence de balise de FRR-BIER dans l'en-tête de BIER-TE du paquet de BIER-TE de multidiffusion, la détermination, par le noeud de transfert, de la non-configuration du paquet de BIER-TE de multidiffusion avec la balise de commutation rapide de multidiffusion,
la balise de FRR-BIER servant à indiquer qu'il existe un en-tête de BIER pour FRR dans le paquet de BIER-TE de multidiffusion.

4. Procédé selon la revendication 3, comprenant en outre :
le fait de déterminer si noeud de transfert est un noeud de transport selon l'en-tête de BIER-TE ;
en réponse au fait de déterminer que le noeud de transfert est le noeud de transport et à la détermination de la présence de la balise de FRR-BIER dans l'en-tête de BIER-TE, la suppression d'un bit qui représente le noeud de transfert dans l'en-tête de BIER.

5. Procédé selon l'une quelconque des revendications 3 ou 4, dans lequel l'en-tête de BIER est positionné derrière l'en-tête de BIER-TE.

6. Procédé selon la revendication 5, dans lequel l'en-tête de BIER est positionné derrière l'en-tête de BIER-TE et devant une charge utile du paquet de BIER-TE de multidiffusion.

7. Procédé selon l'une quelconque des revendications 3 ou 4, dans lequel la balise de FRR-BIER est implémentée de manière à ce qu'un ou plusieurs bits dans un champ réservé de l'en-tête de BIER-TE soient réglés à une valeur spécifique.

8. Procédé de commutation de réacheminement rapide de multidiffusion, comprenant :
lors de l'encapsulation d'un paquet d'ingénierie de trafic de réplication explicite d'index binaire de multidiffusion, BIER-TE, l'ajout, par un noeud d'entrée, d'une balise de BIER de réacheminement rapide, FRR-BIER, dans un en-tête de BIER-TE du paquet de BIER-TE de multidiffusion et l'ajout, par le noeud d'entrée, d'un en-tête de BIER pour FRR derrière l'en-tête de BIER-TE et la transmission du paquet de BIER-TE.

9. Procédé selon la revendication 8, dans lequel le noeud d'entrée effectue, selon une configuration utilisateur ou selon une instruction de protection de FRR-BIER émise par un contrôleur distant, des opérations d'ajout de la balise de FRR-BIER dans l'en-tête de BIER-TE du paquet de BIER-TE de multidiffusion et l'ajout de l'en-tête de BIER pour FRR derrière l'en-tête de BIER-TE.

10. Procédé selon la revendication 8 ou 9, dans lequel l'en-tête de BIER est positionné derrière l'en-tête de BIER-TE et devant une charge utile du paquet de BIER-TE de multidiffusion.

11. Procédé selon la revendication 8 ou 9, dans lequel la balise de FRR-BIER est implémentée de manière à ce qu'un ou plusieurs bits dans un champ réservé de l'en-tête de BIER-TE soient fixés à une valeur spécifique.

12. Dispositif de commutation de réacheminement rapide de multidiffusion, appliqué à un noeud de transfert, comprenant :
un module de détection (301), configuré pour détecter, lors du transfert d'un paquet d'ingénierie de trafic de réplication explicite d'index binaire de multidiffusion, BIER-TE, qui a été reçu, si une anomalie a lieu dans une liaison de transfert entre le noeud de transfert et un noeud suivant ; le paquet de BIER-TE comprenant un en-tête de BIER-TE et un en-tête de BIER ;
un module de détermination (302), configuré pour déterminer, lorsque le module de détection (301) détecte qu'une anomalie a lieu dans la liaison de transfert entre le noeud de transfert et le noeud suivant, si le paquet de BIER-TE de multidiffusion est configuré avec une balise de commutation de réacheminement rapide de multidiffusion ; et
un module de commutation (303), configuré pour effectuer, lorsque le module de détermination (302) détermine que le paquet de BIER-TE de multidiffusion est configuré avec la balise de commutation de réacheminement rapide de multidiffusion, une commutation de réacheminement rapide de multidiffusion selon la balise de commutation de réacheminement rapide de multidiffusion, le module de commutation est **caractérisé en ce que**, en réponse à la détermination de la configuration du paquet de BIER-TE de multidiffusion avec la balise de commutation de réacheminement rapide de multidiffusion, le module de commutation est configuré pour supprimer l'en-tête de BIER-TE dans le paquet de BIER-TE de multidiffusion et pour effectuer la commutation de réacheminement rapide de multidiffusion selon l'en-tête de BIER du paquet de BIER-TE de multidiffusion.

13. Dispositif de commutation de réacheminement rapide de multidiffusion, appliqué à un noeud d'entrée, le dispositif de réacheminement rapide de multidiffusion est **caractérisé en ce qu'**il comprend :
un module d'ajout, configuré, lors de l'encapsulation d'un paquet d'ingénierie de trafic de réplication explicite d'index binaire de multidiffusion, BIER-TE, à transmettre, pour ajouter une balise de BIER de réacheminement rapide, FRR-BIER, dans un en-tête de BIER-TE du paquet de BIER-TE de multidiffusion, et pour ajouter un en-tête de BIER pour FRR derrière l'en-tête de BIER-TE et
un module de transfert, configuré pour transmettre le paquet de BIER-TE encapsulé.

14. Support d'enregistrement d'ordinateur, stockant un programme pour une commutation de réacheminement rapide de multidiffusion ; lorsqu'il est exécuté par le processeur, le programme de commutation de réacheminement rapide de multidiffusion implémente le procédé de commutation de réacheminement rapide de multidiffusion selon l'une quelconque des revendications 1 à 7 et le procédé selon l'une quelconque des revendications 8 à 11.
